# EUROPEAN PATENT SPECIFICATION

(11) **EP 2 390 235 B1**
(45) Date of publication and mention of the grant of the patent: **14.08.2019**
(21) Application number: 10164517.4
(22) Date of filing: 31.05.2010
(51) Int. Cl.: C02F 3/28, C02F 9/00, C02F 1/44

(54) **METHOD AND PLANT FOR THE TREATMENT OF LIQUID ORGANIC WASTE MATERIAL**
Verfahren und Anlage zur Behandlung von flüssigem organischem Abfallmaterial
Procédé et installation pour le traitement de matériau de déchet organique liquide

(43) Date of publication of application: 30.11.2011
(73) Proprietor: Holzer, André, Saint Petersburg 195027 (RU); Menard, Paul, 30704 Bucarest (RO); Millett, Thomas, 1469 Luxembourg (LU); Kohleick, Reinhard, 42109 Wuppertal (DE)
(72) Inventor: Holzer, André, 195027 Saint-Petersbourg (RU); Menard, Paul, 30704 Bucarest (RO); Lasserre, Jean-Christophe, 34150 Ariane (FR)
(74) Representative: Mellet, Valérie Martine

(56) References cited:
- EP-A2- 0 278 745
- EP-A2- 0 565 176
- WO-A1-96/25368
- WO-A2-2009/147693
- DE-A1-102004 030 482
- JP-A- 59 160 597
- US-A1- 2005 252 858

## Description

The present invention relates to a method and a plant for the treatment of organic waste with a fermentation gas fermenter (or biogas reactor). The biomethanisation is an effective and ecologic method for the treatment of organic wastes while producing energy in the form of methane via methanogenic bacteria.

The methanation allows treating refuse and waste as diverse as waste material, sewage sludge, animal waste, food-processing industries waste, household waste, agricultural waste, etc.

Liquid wastes can be treated by the methanation even when they show suspended material or dry matter, as animal waste (e.g. liquid manure) or sewage sludge. Various wastes are used to be mixed during methanation. For example agricultural wastes can be mixed with animal wastes which contain fat showing a high methanogene potential. Since the wastes are liquid or treated to be liquid, a good homogeneity can be achieved by agitating. The mixing operation typically occurs in a pre-treatment tank. The mixed liquid waste is then pumped to be directed to a biogas reactor where it is subjected to anaerobic fermentation.

When the fermentation is completed the digestate is extracted from the biogas reactor to be treated and stabilized. The residue stemming from the methanation of fermentable waste is comparable to compost and can be used for food or non food cultures (e.g. municipal green spaces). Also the digestate can be used for manuring operation. Regrettably surfaces and the periods of manurings are limited and a solution must be found to treat the continuous flow of digestate stemming from the process of biomethanation. This is why it is looked for treatment of the digestate in an environmentally and economically acceptable way. One of the problems faced by the skilled man in such treatement is to remove the suspended material or dry matter from the liquid digestate.

From prior art disclosed in DE102004030482 and corresponding to the preambles of claims 1 and 11, the treatment process involves at least two stages of sedimentation (or decantation) of the digestate in order to remove the maximum of suspended material or dry matter before it is subjected to ultrafiltration and reverse osmosis. In this process, a first sedimentation stage, which can optionally take place in the biogas reactor, results in the removal of the first sediment phase to be used as compost. Optionally the first sediment phase is further subjected to another sedimentation stage in order to reduce again its volume before being used as compost. The first liquid phase is submitted to a second sedimentation stage carried out with preference with flocculent. The second liquid phase obtained is then submitted to ultrafiltration whereas the second sedimented phase is returned to the biogas reactor. A disadvantage of this process is that the sedimentations stages take a lot of time and do not allow a continuous treatment of the digestate. More, as suspension material are difficult to separate from the liquid and in order to protect as much as possible the ultrafilter membrane which is expensive, the treatment of the digestate involves preferably the use of flocculent which increase the costs.

To the contrary, US6368849 discloses a process where no sedimentation is carried out on the digestate before submitting it to the ultrafiltration stage. According to this process fibrous and particle of a size of more than about 1 mm are removed from the waste material before it enters the biogas reactor. After the fermentation is done, the digestate is pumped to be directly filtered by an ultrafiltration unit. Unfortunately, as a result of the high content of suspended material in the digestate, only a relatively small amount of liquid will exit the ultrafiltration unit as particle-free permeate. The remainder is recirculated to the biogas reactor. More, the ultrafilter will require regular cleaning which can take about 4 to 6 hours per day. During the cleaning of the membrane, the ultrafiltration unit is not in operation.

The problem to be solved by the invention is to find an economical process allowing a continuous and efficient treatment of the digestate that overcome the drawbacks of the prior art.

One aspect of the invention relates to a method of treatment of an organic waste material in a liquid form comprising subjecting the liquid to anaerobic fermentation in a biogas reactor resulting in a digestate and subjecting the digestate to ultrafiltration, resulting in a retentat and an ultrafiltrate, and reverse osmosis wherein the digestate from the biogas reactor is centrifuged in a centrifugation step resulting in a centrifugate liquid fraction and a centrifugate concentrate fraction, before being subjected to ultrafiltration, the centrifugate concentrate fraction being returned to the biogas reactor and the centrifugate liquid fraction being subjected to the ultrafiltration step, and further wherein the ultrafiltration step further includes regular backwashing by reversing the direction of the ultrafiltrate and regular inversion of the direction of circulation of the retentate.

As it will be seen later one of the advantages of the centrifugation step is to reduce the volume of liquid to be treated by the ultrafiltration unit without any loss of organic material to be fermented and bacteria, at the same time the centrifugation step allows to reduce, in a continuous way and to a defined value, the content of dry matter in the liquid subjected to ultrafiltration in order to manage the ultrafiltration step in the best and economical way.

In a preferred embodiment of the invention, the centrifugate liquid fraction contains a content of dry matter lower than 3 %, and preferably lower than 2 %.

In another preferred embodiment of the invention, the centrifugation step is configured so that the centrifugate concentrate fraction represents about 20 to 50 % and with preference about 20 to 30 % in volume of the digestate entering the centrifuge.

With preference, the ultrafiltration step includes backwashing by reversing the direction of the ultrafiltrate flow through the membrane every half hour for a duration of one minute. With preference, the
ultrafiltration step includes regular wash by acid or sodium hydroxide performed less than one time a day.

In a preferred embodiment of the invention, the retentate of ulrafiltration and/or the products generated by the backwashing are returned to the biogas reactor.

With preference, the ultrafiltrate is further subjected to a reverse osmosis step after modification of its pH by addition of acid. In a preferred embodiment, the ultrafiltrate pH is lower than 8 after modifications.

With preference the reverse osmosis step includes regular wash of the membranes with water synchronized with the wash of the ultrafiltration membrane.

Optionally, the digestate is subjected to a liquid/solid separation before the centrifuge step. With preference said liquid/solid separation remove solid particle above 3 mm.

Another aspect of the invention relates to a plant for treatment of an organic waste material in liquid form, comprising a biogas reactor, an ultrafiltration unit, producing a retentate and an ultrafiltrate, and a reverse osmosis unit wherein the plant comprise a centrifuge to treat the digestate before the ultrafiltration unit, the centrifuge being configured so that its treatment results in a centrifugate liquid fraction and a centrifugate concentrate fraction, and means to redirect the centrifuge concentrate to the biogas reactor and further wherein the ultrafiltration unit is configured to provide regular backwashing by reversing the direction of the ultrafiltrate and regular inversion of the direction of circulation of the retentate. With preference the centrifuge is a solid bowl centrifuge. Optionally the plant comprises means for achieving a solid/liquid separation placed before the centrifuge, with preference such means allow particles over 3 mm being removed.

In a preferred embodiment of the invention the plant further comprises a heat recovery equipment to recover heat from the digestate at the exit of the biogas reactor before the centrifuge and /or from the water at the exit of the reverse osmosis unit.

Preferably the plant further comprises means to redirect the retentate from the ultrafiltration unit and/or the product of the backwashing of the ultrafiltration unit to the biogas reactor.

With preference the reverse osmosis step includes regular wash of the membranes with water synchronized with the wash of the ultrafiltration membrane.

Optionally, the digestate is subjected to a liquid/solid separation before the centrifuge step. With preference said liquid/solid separation remove solid particle above 3 mm.

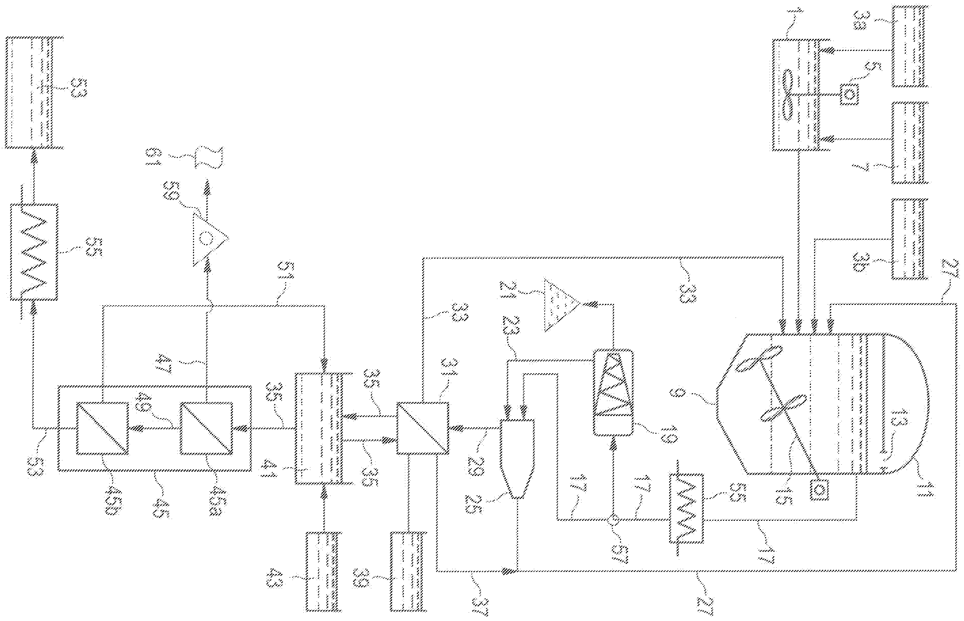

It is understood from this definition that the invention resides in the introduction of a continuous centrifugation step in order to define and control the content of dry matter in the liquid subjected to ultrafiltration. The invention also consists in a continuous cleaning of the ultrafiltration membrane adapted to the content of dry matter in the liquid filtered. The invention consists in finding the best compromise between the removal of dry matter and the protection of the ultrafiltration membranes. The invention further consists in giving the opportunity to completely destroy the organic material by subjecting it to one, two or more cycles of fermentation within the same biogas reactor. The method and plant according to the invention are now described with reference to figure 1 of the drawings which show a treatment plant according to the invention.

With preference, the treatment plant comprises a collection tank (1) for collecting the liquid waste material (3a), with preference the collection tank (1) is provided with agitating means (5). In the collection tank, the waste material (3a) is collected and diluted by addition of water (7). The diluted waste material is pumped to be led to the biogas reactor (9) when the dry matter is at a concentration less than 12 %. The rate of 12 % allows the diluted waste material to be pumped. However, according to the invention, it is also possible to provide the biogas reactor (9) directly with waste material (3b), when the dry matter is at a concentration above 12 % for example from 25 to 35 % in the limit of one tenth of the total input. We remind here that the dry matter refers to suspended material and non-suspended material that can be found in the liquid waste material (3a, 3b) to be fermented.

The anaerobic fermentation takes place in the biogas reactor (9). The reactor (9) can be of important size and contains about 2 000 to 11 000 m³ for example. Biogas (11) produced by the fermentation is removed from the reactor (9) via an outlet (13) at the top of the reactor (9) vessel. The collecting of the biogas (11) is done according to conventional methods known from the skilled man and therefore not described any further in the present description.

According to the invention, the biogas reactor (9) is provided with agitating means (15) and recirculation pumps (not represented in the drawing) in order to have the liquid waste constantly in movement. This is to avoid the sedimentation of the dry matter and the genesis of a deposit in the bottom of the reactor (9). The constant agitation of the liquid waste also avoids the genesis of a film or a crust on the liquid surface that could disturb the collect of the produced biogas (11) and in particular of methane.

The residence time in the biogas reactor (9) will vary depending on several factors, such as the nature of the waste material (3a, 3b) for example. For pig manure an average residence time is of about 20 days, whereas for cattle slurry the average residence time is of about 60 days. With respect to the invention, the biogas reactor (9) is provided with a steady flow of liquid waste material that can be new material (3a, 3b) or recycled material (27, 33, 37) as we will see later. In order to have a continuous process, the biogas reactor (9) is supplied with a continuous flow of liquid waste material, and the same volume of liquid is removed continuously as digestate (17). The volume of the biogas reactor (9) and the rates of flow entering and going out of the reactor (9) are calculated to have the average desired residence time of the waste liquid material in the reactor (9) for proceeding with the fermentation.

So, once the anaerobic fermentation is done, the digestate (17) contained in the biogas reactor (9) is pumped to be treated according to the invention. Heat recovery equipment (55) can be used on the digestate (17) at the exit of the reactor (9). Depending on the liquid waste material (3a, 3b) treated in the biogas reactor (9), the digestate (17) may contain solid elements. For example, pig manure may contain straw which is known to be non-fermentable. Should the digestate (17) contain such particles of above about 3 mm, it is preferred to remove them before the centrifuge step. This can be done by a mechanical separator (19) or by filtration. The separator (19) can be a screw press or any other device that allows a continuous liquid/solid separation. The removed solid phase (21) that has been removed or filtered off can be, for example, used as compost. It is understood that this step is optional and may not be carried out for example when the waste material is dropping. A three-way valve (57) gives therefore the opportunity to provide the centrifuge unit (25) directly with the digestate (17) or to direct the digestate(17) to the separator (19).

The liquid phase (23) of the digestate (17) containing the organic dry matter in suspension is directed to the treatment unit to be treated according to the invention. The liquid phase (23) of the digestate (or the digestate (17) when the removal of solid element is not necessary) entering in the treatment unit may contain a content of dry matter of about 3 to 6 % or more in the form of suspended particles.

According to the invention, the treatment unit comprises a centrifuge unit (25), an ultrafiltration unit (31) and a reverse osmosis unit (45).

### The centrifugation step.

Centrifugation is done via a centrifuge (25) with preference the centrifuge used is a solid bowl centrifuge. One of the advantages of the use of such a centrifuge (25) is to allow having a continuous treatment of the digestate (17, 23). The function of the centrifugation step is the clarification of the digestate (17, 23), i.e. to remove a maximum of suspended dry matter before the ultrafiltration step. Indeed, before the centrifugation step the liquid to be treated contains a content of about 3 to 6 % or more of dry matter. The parameters of the solid bowl centrifuge are adjusted to result in the determination of a clarified liquid (29) that shows a content of less than 3 % and preferably less than 2 % of dry matter. This result is obtained by the adjustment of the parameters of centrifugation such as the residence time within the centrifuge, the differential speed of the scroll and the bowl and/or the design of the scroll. The adjustment parameters depend on the quality of the digestate (17, 23) and vary accordingly. The adjustment of the centrifugation parameters is done by the skilled man without excessive difficulty. According to the invention the centrifuge will centrifuge from 5 to 20 m³ of liquid per hour and with preference about 15 m³ per hour.

The centrifugate concentrate (27) represents about 20 to 50 % of the volume of the total liquid centrifuged. With preference the centrifugate concentrate (27) represents about 20 to 30 % of the liquid treated, and with preference about 20 %. The centrifugate concentrate (27) contains betwen 80 and 95 % of water, with preference between 85 and 90 % of water. Preferably, the centrifugate concentrate (27) contains 88 % of water. The centrifugate concentrate (27) can be removed to be used as compost. However, according to the invention the centrifugate concentrate (27) is returned to the biogas reactor (9).

By leading the centrifugate concentrate (27) back to the biogas reactor (9), an improved degradation of the organic component is obtained as well as an enhanced fermentation, since bacteria which are active in the fermentation process are returned to the reactor (9). In the biogas reactor (9), the suspended particles or dry matter extracted from the centrifuge step will be further destroyed in a new methanisation cycle. The dismissal upstream to the dry material activated by methanogenic bacteria contributes to grow the existing colony and therefore to accelerate the methanation.

The content of carbon dioxide depends only on the nature of the entering substratum (3a, 3b) and varies according to the respective methanogenic potential. Every substratum show a different methanogenic potential given from 50 to 75 % of CH₄ on average. In a preferred embodiment of the process according to the invention the centrifugate concentrate (27) is always recycled. The recycling of the centrifugate concentrate (27) allows a second methanisation cycle for the organic matter contained. From this second methanisation it is expected to produce approximately 10 % more of biogas (11) by the fact of the residual fermentation.

Contrary to prior art where the residual fermentation is done in a second biogas reactor, the invention avoid the necessity of a second reactor or to proceed with a two-stage fermentation process.

The contribution of the dry material in the biogas reactor (9) is real time managed thanks to the big concentration of methanogenic bacteria associated with this material and is thus fermented definitively during its second or further passage in the biogas reactor (9). Because of the choice of the centrifugation parameters, the process according to the invention does not require the addition of flocculants to the centrifugate liquid fraction (29) or clarified fraction. The clarified fraction (29) does not need to be further filtered or to make a second pass into the centrifuge (25) before being directed to the ultrafiltration unit. According to the invention, the clarified fraction (29) contains a content of dry material lower than 3 %, and with preference lower than 2 %. The clarified fraction represents about 80 to 50 % of the liquid entering the centrifuge. With preference the clarified fraction represent about 80 to 70 % of the liquid entering the centrifuge, preferably it represents about 80 %.

### The ultrafiltration step

The function of the ultrafiltration step is to obtain from the centrifugate liquid fraction a particle-free permeate. Ultrafiltration is performed in an ultrafiltration unit (31) using a tubular ultrafiltration membrane. The ultrafiltration unit (31) is equipped with several modules with plastic membranes of ultrafiltration working in tangential ultrafiltration internal / external. The number of modules depends on the size of the treatment plant. The separation is performed at a pressure lower than 2 bars. In order to protect as much as possible the membrane during the filtering, the process according to the invention involves:
- Inversion of the direction of circulation of the retentate (33), in order to minimize the accumulation of material at the inlet of the membrane in the time.
- Regular backwashing by reversing the direction of flow through the membrane in order to decrease the clogging of membranes and so minimize the fall of the flow of the ultrafiltrate (35) in the time.

The backwashing is realized by injection of a specified quantity of ultrafiltrate (35) from the outside inward hollow fibers composing modules. In backwashing, the transmembrane pressure is periodically inverted by the use of a secondary pump, so that permeate flows back into the feed, lifting the fouling layer from the surface of the membrane. The backwashing helps to decrease the filter cake, a small layer which forms on the membrane and limits the flow of permeate (35) through the fiber.

The frequency and the duration of these backwashing are defined according to the quality of the digestate (17, 23) to treat. For example the frequency can be every half hour for the duration of one minute.

In a preferred embodiment the product (37) generated by these backwashing can be mixed with the centrifugate concentrate (27) and be recycled in the biogas reactor (9) to be submitted to a second cycle of methanisation. Indeed, this fraction (37) also contains bacteria and dry matter.

According to the invention, a stage of wash by acid or by sodium hydroxide (39) is planned. The acid or the sodium hydroxide (39) is used to degrade mineral or organic matters. We remind here that the digestate (17, 23) essentially consists of organic matters. The stage of wash by acid or by sodium hydroxide takes 1 to 4 hours and is performed on one part of the modules of the ultrafiltration unit (31).

In order to have a continuous treatment of the digestate (17, 23), the washing is not done over all the modules at the same time. Therefore, during the washing, the ultrafiltration unit is still being usable. According to the invention the ultrafiltration unit capacity is reduced to about half of its initial capacity during the washing. This allows a continuous treatment of the digestate (17, 23), 24 hours over 24. The washing step can be performed every day. However according to the invention it is performed less than one time a day. Indeed, the low rate of dry matter entering the unit of ultrafiltration added to the regular inversion of the retentat and the backwashing of the membrane allows to limit down time of the ultrafiltration module in order to be washed.

The ultrafiltrate (35) is then sent towards a unit of reverse osmosis (45) having undergone a modification of the pH by addition of acid (43) in a tank (41). After modification the pH must be lower than 8.

### The reverse osmosis

The reverse osmosis step is performed in a reverse osmosis unit (45) by a conventional spiral reverse osmosis membrane unit. The reverse osmosis can be either performed as a batch process or a continuous process. In a preferred embodiment the reverse osmosis is performed as a continuous process. It consists in two passes.

In the first pass (45 a) of reverse osmosis, the ultrafiltrate is divided into two parts:
- The permeate (49) that crosses the membrane and is cleared of the major part of its ions before being managed towards the second pass (45b).
- The retentate (47) which does not cross the membrane and contains all the reserved compounds, is evacuated to be valued because rich in mineral salts and ammonium. The retentate (47) is treated by vacuum evaporation (59) using the heat recovery of the system in order to get solid fertilizer (61).

In the second pass (45b), the principle is identical to the first one, but the quality of the obtained permeate (53) is compatible with a discharge in the natural environment. The retentate (51) can be recycled at the top of the first pass (45a).

According to the invention, a stage of wash of the membranes by water or by acid or by sodium hydroxide is regularly planned. This stage is managed in order to allow a continuous process. With preference the stage of wash of the reverse osmosis unit (45) is synchronize with the stage of wash of the ultrafiltration unit (31) by sodium hydroxide or by acid.

The water (53) extracted from the module of reverse osmosis has a pH included between 5,2 and 7. The pH varies according to the quality of the digestate (17, 23). The water (53) is little mineralized water, thus it will be needed very few products for a rectification of pH if necessary. The temperature of the water is between 35 and 40 °C. A heat recovery equipment (55) can be used on the water before it is released.

An important advantage of the treatment plant described above is that the entire liquid/solid separation steps are taken after the biogas reactor (9) and that the process is continuous.

### Example

A biogas reactor (9) of 10654 m³ is continuously provided with new liquid waste material with a rate of flow of 10 m³/h. The biogas reactor (9) is also provided with recirculating liquid material from the digestate treatment process according to the invention. The total liquid material rate of flow (new liquid waste material added to recirculating added material) is 17,8 m³/h. The same amount of liquid as digestate (17) is pumped from the biogas reactor (9) with the same rate of flow of 17,8 m³/h in order to keep the liquid level constant in the biogas reactor (9).

The digestate (17) is subjected to the centrifugation step (25) where the centrifugate concentrate (27) is returned to the biogas reactor (9) with a rate flow of 4,1 m³/h. In this example, 23 % of the volume of the liquid subjected to the centrifugation step (25) is returned to the biogas reactor (9) whereas 77 % corresponding to the liquid fraction (29), with a content of less than 2 % of dry matter, is led to the ultrafiltration step (33).

The ultrafiltration unit (33) is provided with the liquid fraction (29) from the centrifuge (25) with a rate flow of 13,7 m³/h. The retentate (33) of ultrafiltration is recycled to the biogas reactor (9) with a rate flow of about 0,4 m³/h. The permeate (or ultrafiltrate) (35) is directed to an intermediate tank (41) with a rate flow of about 13,3 m³/h. From this intermediate tank (45) a flow of permeate (35) is pumped to be used for backwashing the ultrafiltration membrane. The product of the backwashing is returned to the biogas reactor (9) with a global rate flow of 3,3 m³/h. Therefore the global recycled material rate flow is 7,8 m³/h. It should be appreciated that the backwashing recycled material represents about 42 % of the total volume of the recycled liquid. From the volume pumped from the biogas reactor (9) about 74 % will exit the ultrafiltration unit as particle-free permeate. Due to the backwashing process only 56 % of the initial volume pumped from the biogas reactor (9) is subjected to reverse osmosis (45).

The ultrafiltrate (35) is acidified in the intermediate tank (41) with addition of sulfurous acid to a pH lower than 8. The ultrafiltrate (35) is then pumped with a rate flow of about 10 m³/h. It is added with about 2,1 m³/h of liquid material (51) recycled from the second stage (45b) of reverse osmosis. The total rate flow entering the first stage (45a) of reverse osmosis is therefore 12,1 m³/h.

From the first stage of reverse osmosis (45a), the retentate (47) is extracted with a flow rate of 1,6 m³/h. The permeate (49) is directed to the second stage (45b) of reverse osmosis with a rate flow of 10,5 m³/h. The concentrate (51) of this second stage is recycled in the first stage (45a) with a rate flow of 2,1 m³/h whereas the recycled water (53) exits the treatment unit with a rate flow of 8,4 m³/h.

The invention is not limited to the embodiments which have been described above solely by way of example and includes all the embodiments that the skilled man can envisage within its given definition in the appended claims.

## Claims

1. Method of treatment of an organic waste material (3a, 3b) in a liquid form comprising subjecting the liquid to anaerobic fermentation in a biogas reactor (9) resulting in a digestate (17, 23) and subjecting the digestate (17, 23) to ultrafiltration (31), resulting in a retentate (33) and an ultrafiltrate (35), and subjecting the ultrafiltrate to reverse osmosis (45) **characterized in that**:
- the digestate (17, 23) from the biogas reactor (9) is centrifuged in a centrifugation step (25) resulting in a centrifugate liquid fraction (29) and a centrifugate concentrate fraction (27), before being subjected to ultrafiltration (31), the centrifugate concentrate fraction (27) being returned to the biogas reactor (9) and the centrifugate liquid fraction (29) being subjected to the ultrafiltration step (31), and **in that**
- the ultrafiltration step (31) includes regular backwashing by reversing the direction of the ultrafiltrate (35) and regular inversion of the direction of circulation of the retentate (33).

2. Method according to claim 1 **characterized in that** the centrifugate liquid fraction (29) contains a content of dry matter lower than 3 %, and with preference lower than 2 %.

3. Method according to claim 1 or 2 **characterized in that** the centrifugation step (25) is configured so that the centrifugate concentrate fraction (27) represents about 20 to 50 % and with preference about 20 to 30 % in volume of the digestate (17, 23) entering the centrifuge.

4. Method according to any of claim 1 to 3 **characterized in that** the backwashing by reversing the direction of the ultrafiltrate (35) flow through the membrane is every half hour for a duration of one minute.

5. Method according to any of claim 1 to 4 **characterized in that** the ultrafiltration step (31) includes regular wash by acid or by sodium hydroxide (39) performed less than one time a day.

6. Method according to claim 1 to 5 **characterized in that** the retentate (33) of ultrafiltration and/or the products (37) generated by the backwashing are returned to the biogas reactor (9).

7. Method according to any of claim 1 to 6 **characterized in that** the ultrafiltrate (35) is further subjected to a reverse osmosis step after modification of its pH by addition of acid (43), with preference the ultrafiltrate pH is lower than 8 after modifications.

8. Method according to any of claim 1 to 7 **characterized in that** the reverse osmosis step (45) includes regular wash of the membranes with water synchronized with the wash of the ultrafiltration membrane.

9. Method according to any of claim 1 to 8 **characterized in that** the digestate is subjected to a liquid/solid separation (19) before the centrifuge step (25), with preference said liquid/solid separation (19) removes solid particle above 3 mm.

10. Plant for treatment of an organic waste material in liquid form, comprising a biogas reactor (9), an ultrafiltration unit (31) resulting in a retentate (33) and an ultrafiltrate (35), and a reverse osmosis unit (45) configured to receive the ultrafiltrate (35), **characterized in that**:
- the plant comprises a centrifuge (25) to treat the digestate (17, 23) before the ultrafiltration unit (31), the centrifuge being configured so that its treatment results in a centrifugate liquid fraction (29) and a centrifugate concentrate fraction (27), and means to redirect the centrifuge concentrate fraction (27) to the biogas reactor (9), and **in that**
- the ultrafiltration unit (31) is configured to provide regular backwashing by reversing the direction of the ultrafiltrate (35) and regular inversion of the direction of circulation of the retentate (33).

11. Plant according to claim 10 wherein the centrifuge (25) is a solid bowl centrifuge.

12. Plant according to claim 10 or 11 **characterized in that** it further comprises means (19) for achieving a solid/liquid separation before the centrifuge (25), with preference such means allow particles over 3 mm being removed.

13. Plant according to any of claim 10 to 12 **characterized in that** it further comprises a heat recovery equipment (55) to recover heat from the digestate (17, 23) at the exit of the biogas reactor (9) before the centrifuge (25) and /or from the water (53) at the exit of the reverse osmosis unit (45).

14. Plant according to any of claim 10 to 13 **characterized in that** it further comprises means to redirect the retentate (33) from the ultrafiltration unit (31) and/or the product (37) of the backwashing of the ultrafiltration unit (31) to the biogas reactor (9).

## Patentansprüche

1. Verfahren zur Behandlung eines organischen Abfallmaterials (3a, 3b) in flüssiger Form, umfassend das Unterziehen der Flüssigkeit einer anaeroben Fermentation in einem Biogasreaktor (9), was zu einem Gärrest (17, 23) führt, und das Unterziehen des Gärrests (17, 23) einer Ultrafiltration (31), wobei ein Retentat (33) und ein Ultrafiltrat (35) entstehen, und das Unterziehen des Ultrafiltrats einer Umkehrosmose (45), **dadurch gekennzeichnet, dass**:
- der Gärrest (17, 23) aus dem Biogasreaktor (9) in einem Zentrifugationsschritt (25) zentrifugiert wird, was zu einer Zentrifugatflüssigkeitsfraktion (29) und einer Zentrifugatkonzentratfraktion (27) führt, bevor er einer Ultrafiltration (31) unterzogen wird, wobei die Zentrifugatkonzentratfraktion (27) in den Biogasreaktor (9) zurückgeführt wird und die Zentrifugatflüssigkeitsfraktion (29) dem Ultrafiltrationsschritt (31) unterworfen wird, und dadurch dass
- der Ultrafiltrationsschritt (31) ein regelmäßiges Rückspülen durch Umkehren der Richtung von dem Ultrafiltrat (35) und eine regelmäßige Inversion der Zirkulationsrichtung des Retentats (33) beinhaltet.

2. Verfahren nach Anspruch 1, **dadurch gekennzeichnet, dass** die Zentrifugatflüssigkeitsfraktion (29) einen Trockensubstanzgehalt von weniger als 3% und vorzugsweise weniger als 2% enthält.

3. Verfahren nach Anspruch 1 oder 2, **dadurch gekennzeichnet, dass** der Zentrifugationsschritt (25) so konfiguriert ist, dass die Zentrifugatkonzentratfraktion (27) etwa 20 bis 50% und vorzugsweise etwa 20 bis 30 Vol.-% des Gärrestes (17, 23) ausmacht, der in die Zentrifuge eintritt.

4. Verfahren nach einem der Ansprüche 1 bis 3, **dadurch gekennzeichnet, dass** das Rückspülen durch Umkehren der Richtung des Ultrafiltratflusses (35) durch die Membrane jede halbe Stunde für eine Dauer von einer Minute erfolgt.

5. Verfahren nach einem der Ansprüche 1 bis 4, **dadurch gekennzeichnet, dass** der Ultrafiltrationsschritt (31) ein regelmäßiges Waschen mit Säure oder mit Natriumhydroxid (39) umfasst, das weniger als einmal pro Tag durchgeführt wird.

6. Verfahren nach Anspruch 1 bis 5, **dadurch gekennzeichnet, dass** das Retentat (33) der Ultrafiltration und/oder die durch das Rückspülen erzeugten Produkte (37) in den Biogasreaktor (9) zurückgeführt werden.

7. Verfahren nach einem der Ansprüche 1 bis 6, **dadurch gekennzeichnet, dass** das Ultrafiltrat (35) nach der Modifizierung seines pH-Wertes durch Zugabe von Säure (43) weiter einem Umkehrosmoseschritt unterzogen wird, vorzugsweise liegt der pH-Wert des Ultrafiltrats nach Modifikationen unter 8.

8. Verfahren nach einem der Ansprüche 1 bis 7, **dadurch gekennzeichnet, dass** der Umkehrosmoseschritt (45) das regelmäßige Waschen der Membranen mit Wasser beinhaltet, das mit dem Waschen der Ultrafiltrationsmembran synchronisiert ist.

9. Verfahren nach einem der Ansprüche 1 bis 8, **dadurch gekennzeichnet, dass** der Gärrest vor dem Zentrifugationsschritt (25) einer Flüssig-/Fest-Trennung (19) unterzogen wird, wobei die Flüssig-/Fest-Trennung (19) vorzugsweise feste Partikel über 3 mm entfernt.

10. Anlage zur Behandlung eines organischen Abfallmaterials in flüssiger Form, umfassend einen Biogasreaktor (9), eine Ultrafiltrationseinheit (31), die ein Retentat (33) und ein Ultrafiltrat (35) und eine umgekehrte Osmoseeinheit (45), die zur Aufnahme des Ultrafiltrats (35) konfiguriert ist, ergibt, **dadurch gekennzeichnet, dass**
- die Anlage eine Zentrifuge (25) umfasst, um den Gärrest (17, 23) vor der Ultrafiltrationseinheit (31) zu behandeln, wobei die Zentrifuge so konfiguriert ist, dass die Behandlung eine Zentrifugatflüssigkeitsfraktion (29) und eine Zentrifugatkonzentratfraktion (27) ergibt, und Mittel, um die Zentrifugenkonzentratfraktion (27) in den Biogasreaktor (9) umzuleiten, und dadurch dass
- die Ultrafiltrationseinheit (31) so konfiguriert ist, dass sie eine regelmäßige Rückspülung durch Umkehrung der Richtung des Ultrafiltrats (35) und regelmäßige Umkehrung der Zirkulationsrichtung des Retentats (33) bereitstellt.

11. Anlage nach Anspruch 10, bei der die Zentrifuge (25) eine Vollmantelzentrifuge ist.

12. Anlage nach Anspruch 10 oder 11, **dadurch gekennzeichnet, dass** sie ferner Mittel (19) zur Erzielung einer Fest-/Flüssig-Trennung vor der Zentrifuge (25) umfasst, wobei vorzugsweise solche Mittel, die die Entfernung von Partikeln über 3 mm ermöglichen.

13. Anlage nach einem der Ansprüche 10 bis 12, **dadurch gekennzeichnet, dass** sie ferner eine Wärmerückgewinnungsvorrichtung (55) umfasst, um Wärme aus dem Gärrest (17, 23) am Ausgang des Biogasreaktors (9) vor der Zentrifuge (25) und/oder aus dem Wasser (53) am Ausgang der Umkehrosmoseeinheit (45) zu gewinnen.

14. Anlage nach einem der Ansprüche 10 bis 13, **dadurch gekennzeichnet, dass** sie ferner Mittel umfasst, um das Retentat (33) von der Ultrafiltrationseinheit (31) und/oder dem Produkt (37) der Rückspülung der Ultrafiltrationseinheit (31) zum Biogasreaktor (9) umzuleiten.

## Revendications

1. Méthode de traitement d'un déchet organique (3a, 3b) sous forme liquide comprenant la soumission du liquide à une fermentation anaérobique dans un réacteur de biogaz (9) résultant en un digestat (17, 23) et la soumission du digestat (17, 23) à une ultrafiltration (31), résultant en un rétentat (33) et en un ultrafiltrat (35), et la soumission de l'ultrafiltrat à une osmose inverse (45), **caractérisée en ce que** :
- le digestat (17, 23) du réacteur de biogaz (9) est centrifugé dans une étape de centrifugation (25) résultant en une fraction liquide centrifugée (29) et en une fraction concentrée centrifugée (27), avant d'être soumise à une ultrafiltration (31), la fraction concentrée centrifugée (27) étant retournée vers le réacteur de biogaz (9) et la fraction liquide centrifugée (29) étant soumise à l'étape d'ultrafiltration (31), et **en ce que**
- l'étape d'ultrafiltration (31) comprend un rétrolavage régulier par une inversion de la direction de l'ultrafiltrat (35) et une inversion régulière de la direction de ciculation du rétentat (33).

2. Méthode selon la revendication 1, **caractérisée en ce que** la fraction liquide centrifugée (29) contient une teneur en matière sèche inférieure à 3%, et de préférence inférieure à 2%.

3. Méthode selon la revendication 1 ou 2, **caractérisée en ce que** l'étape de centrifugation (25) est configurée de sorte que la fraction concentrée centrifugée (27) représente environ 20 à 50% et de préférence environ 20 à 30% en volume du digestat (17, 23) entrant dans la centrifugeuse.

4. Méthode selon l'une quelconque des revendication 1 à 3, **caractérisée en ce que** le rétrolavage par l'inversion de la direction du flux de l'ultrafiltrat (35) à travers la membrane a lieu chaque demi-heure pendant une durée de une minute.

5. Méthode selon l'une quelconque des revendication 1 à 4, **caractérisée en ce que** l'étape d'ultrafiltration (31) comprend un lavage régulier par un acide ou par de l'hydroxyde de sodium (39) mis en oeuvre moins d'une fois par jour.

6. Méthode selon les revendications 1 à 5, **caractérisée en ce que** le rétentat (33) de l'ultrafiltration et/ou les produits (37) générés par le rétrolavage sont rétournés vers le réacteur de biogaz (9).

7. Méthode selon l'une quelconque des revendications 1 à 6, **caractérisée en ce que** l'ultrafiltrat (35) est en outre soumis à une étape d'osmose inverse après la modification de son pH par ajout d'acide (43), de préférence le pH de l'ultrafiltrat est inférieur à 8 après des modifications.

8. Méthode selon l'une quelconque des revendications 1 à 7, **caractérisée en ce que** l'étape d'osmose inverse (45) comprend un lavage régulier des membranes par de l'eau synchronisé avec le lavage de la membrane d'ultrafiltration.

9. Méthode selon l'une quelconque des revendications 1 à 8, **caractérisée en ce que** le digestat est soumis à une séparation liquide/solide (19) avant l'étape de centrifugation (25), de préférence ladite séparation liquide/solide (19) éliminant les particules solides au-dessus de 3 mm.

10. Installation de traitement d'un déchet organique sous forme liquide, comprenant un réacteur de biogaz (9), une unité d'ultrafiltration (31) résultant en un rétentat (33) et en un ultrafiltrat (35), et une unité d'osmose inverse (45) configurée pour récevoir l'ultrafiltrat (35), **caractérisée en ce que**:
- l'installation comprend une centrifugeuse (25) pour traiter le digestat (17, 23) avant l'unité d'ultrafiltration (31), la centrifugeuse étant configurée de sorte que son traitement résulte en une fraction liquide centrifugée (29) et en une fraction concentrée centrifugée (27), et des moyens pour rediriger la fraction concentrée centrifugée (27) vers le réacteur de biogaz (9), et **en ce que**
- l'unité d'ultrafiltration (31) est configurée pour fournir un rétrolavage régulier par une inversion de la direction de l'ultrafiltrat (35) et une inversion régulière de la direction de ciculation du rétentat (33).

11. Installation selon revendication 10, dans laquelle la centrifugeuse (25) est une centrifugeuse à bol plein.

12. Installation selon la revendication 10 ou 11, **caractérisée en ce qu'**elle comprend en outre des moyens (19) pour réaliser une séparation liquide/solide avant la centrifugeuse (25), de préférence de tels moyens permettent l'élimination de particules solides au-dessus de 3 mm.

13. Installation selon l'une quelconque des revendications 10 à 12, **caractérisée en ce qu'**elle comprend en outre un équipement de récupération de chaleur (55) pour récupérer la chaleur à partir du digestat (17, 23) à la sortie du réacteur de biogaz (9) avant la centrifugeuse (25) et/ou à partir de l'eau (53) à la sortie de l'unité d'osmose inverse (45).

14. Installation selon l'une quelconque des revendications 10 à 13, **caractérisée en ce qu'**elle comprend en outre des moyens pour rediriger le rétentat (33) à partir de l'unité d'ultrafiltration (31) et/ou le produit (37) du rétrolavage de l'unité d'ultrafiltration (31) vers le réacteur de biogaz (9).
